# EUROPEAN PATENT APPLICATION

(11) **EP 0 667 227 A2**
(43) Date of publication of application: **16.08.1995**
(21) Application number: 95300675.6
(22) Date of filing: 03.02.1995
(51) Int. Cl.: B29C 67/00

(54) **Method and apparatus for three dimensional modelling**

(30) Priority: 10.02.1994 IL 10861894
(71) Applicant: CUBITAL LTD., Ra'anana 43650 (IL)
(72) Inventor: Dollberg, Yehoshua, Ra'anana 43359 (IL); Sas, Beniamin, Rehovot 76470 (IL); Meningher, Herbert, Ramat Hasharon 47235 (IL)
(74) Representative: Hillier, Peter

(57) **Abstract**

A technique for three dimensional modeling including the steps of printing onto a multiplicity of sheets (14) a pattern (16) indicating the desired configuration of the sheet and employing the printed pattern (16) to at least partially separate portions of the multiplicity of sheets (14) to define a three dimensional object (22) of predetermined configuration.

## Description

### FIELD OF THE INVENTION

The present invention relates to three-dimensional modeling generally and more particularly to modeling from laminations.

### BACKGROUND OF THE INVENTION

There exist a wide variety of patents relating to three-dimensional modeling. A particularly successful device for three-dimensional modeling is described and claimed in Applicant/Assignee's U.S. Patent 4,961,154, the disclosure of which is incorporated herein. Relevant prior art to that patent appears in the References Cited section thereof.

Patents relating to modeling from laminations include U.S. Patents 4,752,353 and 5,071,503 as well as Published PCT Application WO 8707538.

### SUMMARY OF THE INVENTION

The present invention seeks to provide a highly cost-effective technique for high-speed three dimensional modeling from laminations.

There is thus provided in accordance with a preferred embodiment of the present invention a technique for three dimensional modeling including the steps of printing onto a multiplicity of sheets a pattern indicating the desired configuration of the sheet and employing the printed pattern to at least partially separate portions of the multiplicity of sheets to define a three dimensional object of predetermined configuration.

Preferably, the technique also comprises the steps of stacking and joining the multiplicity of sheets.

In accordance with a preferred embodiment of the present invention the step of employing includes the step of operating on the printed pattern so as to provide at least partial separation of said portions in accordance with said pattern.

There is also provided in accordance with a preferred embodiment of the present invention a technique for three dimensional modeling including the steps of printing onto a multiplicity of sheets a pattern indicating the desired configuration of the sheet, stacking the multiplicity of sheets to define a stack of patterned sheets and operating on the sheets in accordance with the pattern to cause removal of portions of the sheets thereby to cause the stack of patterned sheets to define a three dimensional object of predetermined configuration.

There is also provided in accordance with a preferred embodiment of the present invention a technique for three dimensional modeling comprising the steps of marking a multiplicity of layers of web material with patterns indicating the desired configurations of the layers and operating on the patterns to cause removal of portions of the layers thereby to cause the multiplicity of layers to together define a three dimensional object of predetermined configuration.

In accordance with a preferred embodiment of the invention, the technique also includes the step of adhering the multiplicity of the sheets in the stack to each other.

Preferably, the step of adhering comprises applying adhesive sheet by sheet. Alternatively, the step of adhering comprises applying adhesive following the removal step.

Preferably, the step of operating comprises the application of radiation to the patterned sheets.

In accordance with a preferred embodiment of the present invention the application of radiation is carried out sheet by sheet.

Alternatively, the application of radiation is carried out on a plurality of stacked sheets.

In accordance with yet another preferred embodiment of the present invention, the step of printing comprises the application of a chemical agent to the sheets. The chemical agent may comprise a micro-encapsulated agent. The step of operating may comprise the application of a capsule bursting input to the patterned sheets. Preferably, the step of operating is carried out sheet by sheet. Alternatively the step of operating is carried out on a plurality of stacked sheets.

There is also provided in accordance with a preferred embodiment of the present invention apparatus for three dimensional modeling including a pattern printer for printing onto a multiplicity of sheets a pattern indicating the desired configuration of the sheet, a stacker for stacking the multiplicity of sheets to define a stack of patterned sheets and patternwise separation apparatus operating patternwise on the sheets to cause at least partial separation of portions of the sheets thereby to cause the stack of patterned sheets to define a three dimensional object of predetermined configuration.

There is also provided in accordance with a preferred embodiment of the present invention apparatus for three dimensional modeling comprising a marker for marking a multiplicity of layers of web material with patterns indicating the desired configurations of the layers and selective separation apparatus operating on the patterns to cause at least partial separation of portions of the layers thereby to cause the multiplicity of layers to together define a three dimensional object of predetermined configuration.

In accordance with a preferred embodiment of the invention, the apparatus also includes apparatus for adhering the multiplicity of the sheets in the stack to each other.

Preferably, the adhering apparatus is operative to apply adhesive sheet by sheet. Alternatively, adhesive may be applied prior to or following separation.

Preferably, the separation apparatus employs application of radiation to the patterned sheets.

In accordance with a preferred embodiment of the present invention the application of radiation is carried out sheet by sheet.

Alternatively, the application of radiation is carried out on a plurality of stacked sheets.

In accordance with another preferred embodiment of the present invention, the separation apparatus employs the application of a chemical agent to the patterned sheets. Preferably, the application of a chemical agent is carried out sheet by sheet.

In accordance with yet another preferred embodiment of the present invention, the printer applies a micro-encapsulated agent to the sheets and the separation apparatus employs application of a capsule bursting input to the patterned sheets. Preferably, separation is carried out sheet by sheet. Alternatively it is carried out on a plurality of stacked sheets.

There is also provided in accordance with a preferred embodiment of the present invention a technique for three dimensional modeling including the steps of sequentially stacking a multiplicity of sheets into a stack and adhering each of the sheets to the stack and after each sheet is adhered to the stack, applying energy thereto thereby to pattern the sheet in a desired configuration, whereby the stack of sheets defines a three dimensional object of predetermined configuration.

There is further provided in accordance with a preferred embodiment of the present invention apparatus for three dimensional modeling including stacking apparatus operative to sequentially stack a multiplicity of sheets into a stack and adhere each of the sheets to the stack and energy application apparatus operative after each sheet is adhered to the stack to apply energy thereto, thereby to pattern the sheet in a desired configuration, whereby the stack of sheets defines a three dimensional object of predetermined configuration.

There is also provided in accordance with a preferred embodiment of the present invention a technique for three dimensional modeling including the steps of employing a multi-element contact heating assembly for applying energy to a web material thereby to create patterned sheets in a desired configuration, and sequentially stacking and adhering a multiplicity of said patterned sheets into a stack, whereby the stack of sheets defines a three dimensional object of predetermined configuration.

There is additionally provided in accordance with a preferred embodiment of the present invention apparatus for three dimensional modeling including a multi-element contact heating assembly for applying energy to a web material thereby to create patterned sheets in a desired configuration, and sequential stacking and adhering apparatus for forming a multiplicity of said patterned sheets into a stack, whereby the stack of sheets defines a three dimensional object of predetermined configuration.

There is additionally provided a three dimensional model constructed according to any of the above described techniques.

There is further provided a three dimensional model constructed using any of the above described apparatus.

### BRIEF DESCRIPTION OF THE DRAWINGS

The present invention will be understood and appreciated more fully from the following detailed description taken in conjunction with the drawings in which:
Fig. 1 is a simplified pictorial illustration of three dimensional modeling apparatus constructed and operative in accordance with a preferred embodiment of the present invention;
Fig. 2 is a simplified pictorial illustration of three dimensional modeling apparatus constructed and operative in accordance with an alternative embodiment of the present invention; and
Fig. 3 is a simplified pictorial illustration of three dimensional modeling apparatus constructed and operative in accordance with a further alternative embodiment of the present invention.

### DETAILED DESCRIPTION OF PREFERRED EMBODIMENTS

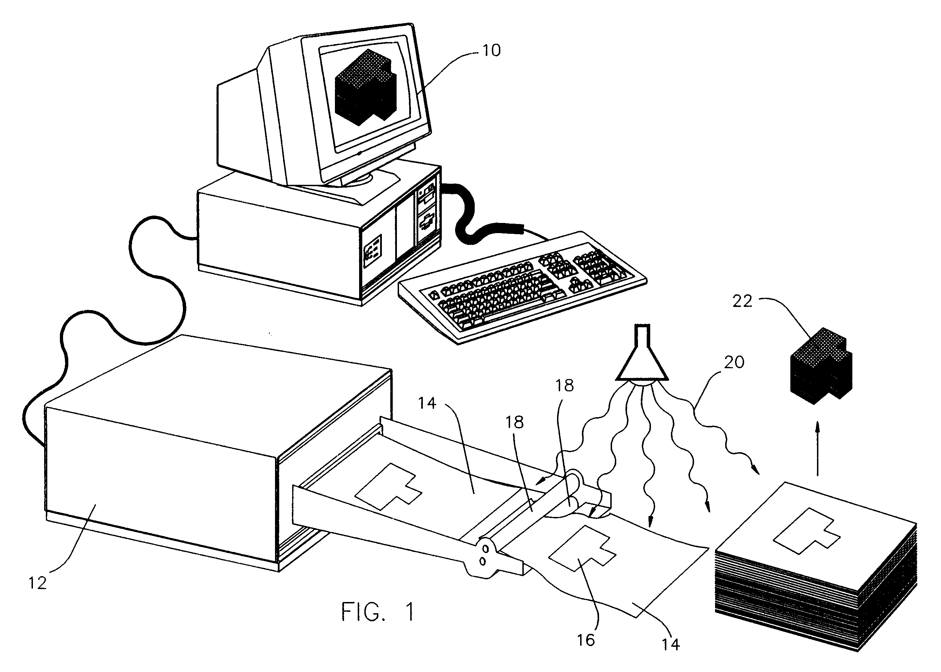

Reference is now made to Fig. 1, which illustrates apparatus and a technique for three dimensional modeling in accordance with one preferred embodiment of the present invention. A three dimensional object is computer generated or scanned into a computer in a conventional manner so as to create a digital file in a computer 10.

The digital file is manipulated either automatically or by an operator into slice data, giving the outline of each of a multiplicity of parallel slices of the object. This slice data is transmitted to a conventional printer, such as a laser printer 12 or any other suitable printer for providing a multiplicity of sequentially printed sheets 14, each bearing a pattern 16 corresponding to a slice of the object. The pattern is preferably an outline pattern, but may alternatively be a solid or striped pattern.

In accordance with one embodiment of the present invention, the ink and/or the substrate employed by printer 12 is a special ink which causes the paper or other substrate onto which it is printed to disintegrate. Such disintegration may be spontaneous or alternatively be responsive to the application of heat or other radiation, such as UV radiation.

Suitable marking apparatus, inks and substrates for this purpose are listed below together with their characteristics:

The marking apparatus may comprise conventional printers or plotters, and preferably include high speed printers such as the Xerox Z9700, the Delphax S6000, the Bull Peripherals MP6060, the Indigo E-Print 1000 and the Zurographic printer described in U.S. Patent 5,157,243.

The marking apparatus may also be employed to spread a layer of adhesive in a patternwise or non-patternwise manner on each sheet as it is printed. Alternatively impact printers may be used to perforate, burn or otherwise weaken the substrate in a patternwise manner. For example, heated pins may be employed for this purpose. As a further alternative, a magnetographic printer may be employed for printing with an ink containing magnetic particles. Upon high pressure fixing, the particles protrude into the paper, thus weakening the sheet along the desired contours.

Suitable substrates include paper, such as ordinary printing paper, aluminum foil or other metal or polyester or other suitable plastics, which may be used for transparencies.

The ink may include dry or liquid toner, ordinary printing ink, electrically conductive printing ink and chemical agents which may be micro-encapsulated.

The chemical agents may include, for example, sulphuric or hydrochloric acid which may be mixed into the ink or toner and cause disintegration of the substrate upon contact. No activation of these agents is required.

Alternatively, the chemical agent may be a flammable agent such as cyclohexane or ethylene glycol which can be mixed into the ink/toner or encapsulated and, when activated, cause burning. Pyrolytic agents such as nitroglycerole or sulfur and potassium chlorate can be mixed into the ink or toner or be encapsulated and, upon activation, cause burning of the substrate. Activation is normally achieved by application of heat to individual sheets or stacks of sheets.

Electrically conductive toners may also be used and may be activated by heating individual sheets or a stack of sheets in a microwave or RF oven.

Conventional black ink or toner may be employed and may be activated by exposure to a power heater or light source. the sheet will reflect the radiation while the black covered areas will absorb energy and heat up sufficiently to burn the sheet, on a sheet by sheet basis.

As seen in Fig. 1, as each sheet 14 leaves the printer 12 it may pass through a pair of rollers 18 which may apply adhesive to one or both sides thereof and may then be subject to heat or other radiation, indicated generally at reference numeral 20. The sheets 14 are then stacked in the order that they are printed and disintegration along the pattern 16 is allowed to take place, producing a three dimensional model 22.

It is to be appreciated that adhesive may be applied by rollers 18 or alternatively, the sheets 14 may be adhered to each other when stacked, either before or following patternwise disintegration of the substrate. Thermoset or pressure sensitive adhesives may be applied to the sheets 14 before marking on the sheets. Alternatively, adhesives may be provided as part of the marking process or downstream thereof in a selective or non-selective manner.

It is further appreciated that following patternwise disintegration of the substrate, it may be necessary to disengage the model 22 from the separated surrounding substrate which defines the "negative" of the object.

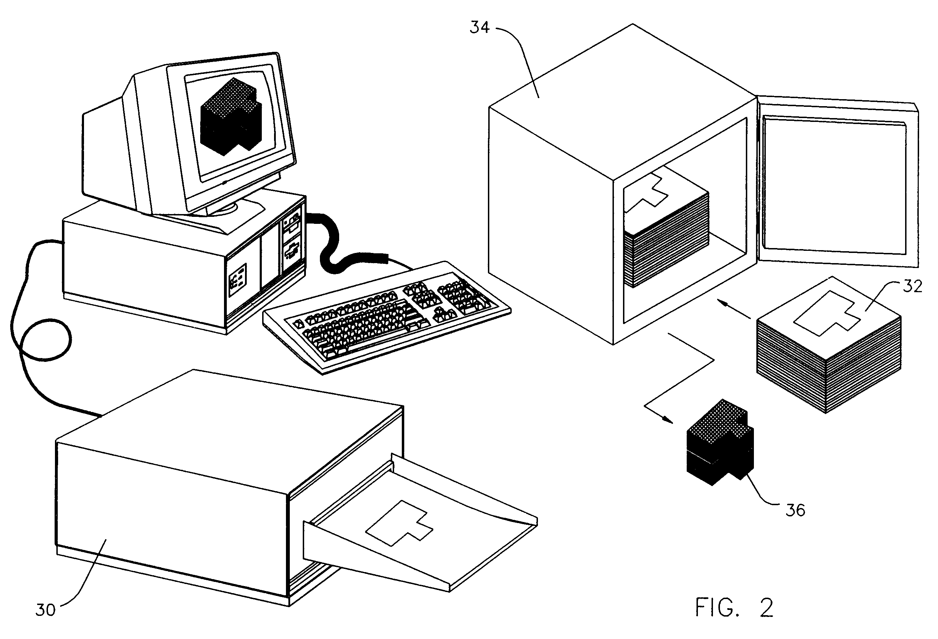

Reference is now made to Fig. 2, which illustrates an alternative embodiment of the present invention. Here, patterned sheets from a printer 30 are stacked as indicated at reference numeral 32 and then placed in a treatment chamber 34, such as a microwave oven or any other radiation or thermal treatment chamber.

Treatment in the chamber 34 causes patternwise disintegration of the substrate, producing a three dimensional model 36.

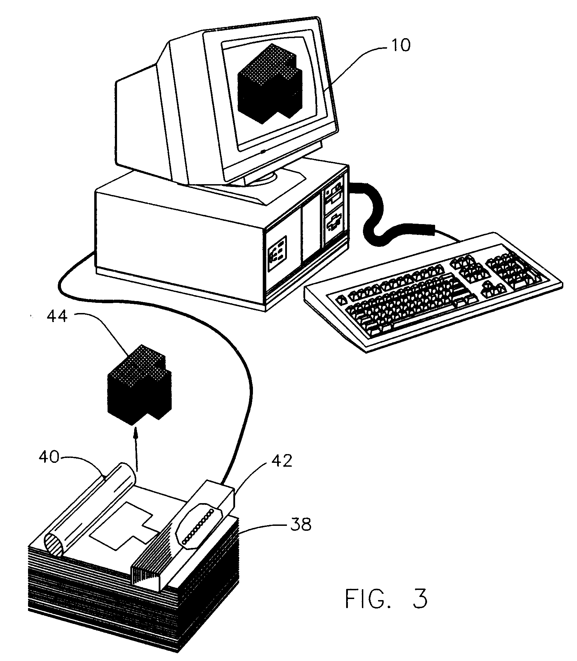

Reference is now made to Fig. 3, which illustrates a further alternative embodiment of the present invention. Here, a substrate 38, such as paper, in continuous web or sheet web form is sequentially stacked and adhered, as by a pressure roller 40. After each layer of substrate is stacked, a multi-element contact heating assembly 42 is employed to selectably configure the layer in a desired pattern.

The multi-element heating assembly 42 may be a pin-type printing head employed in a DEC LA120 or LA 424 Multiprinter, and modified to include a heating element for heating the pins to an appropriate temperature, such as 800 degrees Centigrade.

The stack of configured layers may be separated from unwanted substrate by any suitable technique, thereby producing a three dimensional model 44.

It will be appreciated by persons skilled in the art that the present invention is not limited by what has been particularly shown and described hereinabove. Rather the scope of the present invention is defined only by the claims which follow:

## Claims

1. A technique for three dimensional modeling including the steps of:
printing onto a multiplicity of sheets a pattern indicating the desired configuration of the sheet; and
employing the printed pattern to at least partially separate portions of the multiplicity of sheets to define a three dimensional object of predetermined configuration.

2. Apparatus for three dimensional modeling comprising:
a printer for printing onto a multiplicity of sheets a pattern indicating the desired configuration of the sheet; and
separation apparatus employing the printed pattern to at least partially separate portions of the multiplicity of sheets to define a three dimensional object of predetermined configuration.

3. A technique for three dimensional modeling comprising the steps of:
printing onto a multiplicity of sheets a pattern indicating the desired configuration of the sheet;
stacking said multiplicity of sheets to define a stack of patterned sheets; and
operating on said pattern to cause removal of portions of said sheets thereby to cause said stack of patterned sheets to define a three dimensional object of predetermined configuration.

4. A technique for three dimensional modeling comprising the steps of:
marking a multiplicity of layers of web material with patterns indicating the desired configurations of said layers; and
operating on said layers to cause patternwise removal of portions of said layers thereby to cause said multiplicity of layers to together define a three dimensional object of predetermined configuration.

5. Apparatus for three dimensional modeling including:
a pattern printer for printing onto a multiplicity of sheets a pattern indicating the desired configuration of the sheet;
a stacker for stacking said multiplicity of sheets to define a stack of patterned sheets; and
patternwise separation enabling apparatus operating patternwise on said sheets to at least enable separation of portions of said sheets thereby to cause said stack of patterned sheets to define a three dimensional object of predetermined configuration.

6. Apparatus for three dimensional modeling comprising:
a marker for marking a multiplicity of layers of web material with patterns indicating the desired configurations of said layers; and
selective separation enabling apparatus operating on said patterns to at least enable separation of portions of said layers thereby to cause said multiplicity of layers to together define a three dimensional object of predetermined configuration.

7. A technique for three dimensional modeling including the steps of:
sequentially stacking a multiplicity of sheets into a stack and adhering each of the sheets to the stack; and
after each sheet is adhered to the stack, applying energy thereto thereby to pattern the sheet in a desired configuration, whereby the stack of sheets defines a three dimensional object of predetermined configuration.

8. Apparatus for three dimensional modeling including:
stacking apparatus operative to sequentially stack a multiplicity of sheets into a stack and adhere each of the sheets to the stack; a; a; and
energy application apparatus operative after each sheet is adhered to the stack to apply energy thereto, thereby to pattern the sheet in a desired configuration, whereby the stack of sheets defines a three dimensional object of predetermined configuration.

9. A technique for three dimensional modeling including the steps of:
employing a multi-element contact heating assembly for applying energy to a web material thereby to create patterned sheets in a desired configuration, and
sequentially stacking and adhering a multiplicity of said patterned sheets into a stack, whereby the stack of sheets defines a three dimensional object of predetermined configuration.

10. Apparatus for three dimensional modeling including:
a multi-element contact heating assembly for applying energy to a web material thereby to create patterned sheets in a desired configuration, and
sequential stacking and adhering apparatus for forming a multiplicity of said patterned sheets into a stack, whereby the stack of sheets defines a three dimensional object of predetermined configuration.
